# EUROPÄISCHE PATENTANMELDUNG

(11) **EP 1 342 935 A2**
(43) Veröffentlichungstag der Anmeldung: **10.09.2003**
(21) Anmeldenummer: 03013222.9
(22) Anmeldetag: 21.12.1999
(51) Int. Cl.: F16H 3/00

(54) **Zahnräderwechselgetriebe mit zwei im Kraftfluss parallel zueinander angeordneten Teilgetrieben**

(30) Priorität: 24.12.1998 DE 19860250; 24.04.1999 DE 19918732
(62) Teilanmeldung aus: 99964641.7
(71) Anmelder: DaimlerChrysler AG, 70567 Stuttgart (DE)
(72) Erfinder: Geiberger, Axel, 55128 Mainz (DE); Heinzel, Markus, 73072 Donzdorf (DE); Kolb, Andreas, 73249 Wernau (DE); Sperber, Ralf, 73240 Wendlingen (DE); Straub, Heinrich, 70327 Stuttgart (DE); Wörner, Günter, 71394 Kernen (DE)

(57) **Zusammenfassung**

Es betrifft ein Doppelkupplungsgetriebe mit zwei Getriebekonstanten, deren eines Zahnrad (48) jeweils drehfest auf einer der beiden Zwischenwellen sitzt. Es wird vorgeschlagen, daß ein Schaltelement (57) derart ausgestaltet ist, dass mit diesem sowohl der direkte Getriebegang hergestellt werden kann, als auch zusätzlich ein Losrad mit der Ausgangswelle kuppelbar ist.

## Beschreibung

Die Erfindung betrifft ein Zahnräderwechselgetriebe mit zwei im Kraftfluß parallel zueinander angeordneten Teilgetrieben gemäß dem einteiligen Patentanspruch 1.

Die in Kraftfahrzeugen vorherrschenden Handschaltgetriebe mit einer Reibkupplung sind einfach und robust, haben jedoch den Nachteil, daß während des Gangwechsels eine Zugkraftunterbrechung auftritt. Konventionelle Automatikgetriebe mit einem hydrodynamischen Wandler vermeiden zwar eine Zugkraftunterbrechung während des Gangwechsels, besitzen jedoch aufgrund des Wandlers einen schlechteren Wirkungsgrad als Handschaltgetriebe. Ferner besitzen sie ein höheres Gewicht und sind kostenintensiver.

Bei Zahnräderwechselgetrieben mit zwei reibschlüssigen Lastschaltkupplungen und zwei im Kraftfluß parallel zueinander angeordneten Teilgetrieben können Gangwechsel unter Last durchgeführt werden, und zwar mit einer Überschneidungssteuerung der Lastschaltkupplungen. Damit können kostengünstige Automatikgetriebe mit einem guten Wirkungsgrad erreicht werden. In der Regel sind die geraden Getriebegänge dem einen Teilgetriebe und die ungeraden Getriebegänge dem anderen Teilgetriebe zugeordnet, so daß sequentiell unter Last geschaltet werden kann, jedoch nicht ohne weiteres einzelne Getriebegänge übersprungen werden können, sogenanntes Doppelhochschalten bzw. Doppelrückschalten.

Aus der US 4,658,663 ist ein gattungsbildendes Zahnräderwechselgetriebe bekannt. Bei dem Zahnräderwechselgetriebe ist eine Eingangswelle mit einer Ausgangswelle durch ein erstes und ein zweites Teilgetriebe verbunden, die im Kraftfluß parallel zueinander angeordnet sind und je eine reibschlüssige Lastschaltkupplung aufweisen. Mit den Lastschaltkupplungen sind konzentrisch zueinander angeordnete Zwischenwellen der Teilgetriebe mit der Eingangswelle verbindbar. Die Zwischenwellen sind über Getriebekonstanten, über eine gemeinsame, parallel zur Eingangswelle angeordnete Vorgelegewelle und über Zahnradpaare mit der Ausgangswelle wirkungsmäßig verbindbar. Die Zahnradpaare für die Vorwärtsgetriebegänge I, III, und IV sowie das Zahnradpaar für den Rückwärtsgetriebegang gehören dem ersten Teilgetriebe an. Der vierte Getriebegang ist als direkter Getriebegang ausgelegt und kann durch Einrücken eines Schaltelements zwischen der Ausgangswelle und der Zwischenwelle des ersten Teilgetriebes geschaltet werden.

Dem zweiten Teilgetriebe gehören die Zahnradpaare der Vorwärtsgänge II und V sowie ein zusätzliches Zahnradpaar an, deren Übersetzung gleich der Übersetzung des dritten Getriebegangs ist, dessen Zahnradpaar dem ersten Teilgetriebe angehört. Im ersten Teilgetriebe ist eine Zahnradkupplung für den dritten Getriebegang und die Direktkupplung für den vierten Getriebegang zu einer Wechselkupplung mit einer gemeinsamen Schaltschiebemuffe zusammengefaßt, welche mit einem Losrad des Zahnradpaars für den dritten Getriebegang oder mit der Ausgangswelle kuppelbar ist.

Zwar sind ohne Unterbrechung der Drehmomentübertragung bei dem Zahnräderwechselgetriebe alle Doppelrückschaltungen und Doppelhochschaltungen möglich, jedoch erfordern die Schaltungen vom direkten vierten Getriebegang zu dem ersten und dritten Getriebegang, deren Zahnradpaare ebenfalls dem ersten Teilgetriebe angehören, die zwischenzeitliche Einschaltung des zusätzlichen Zahnradpaars des dritten Getriebegangs. Zum Anfahren aus dem ersten Getriebegang wird stets die erste Lastschaltkupplung des ersten Teilgetriebes genutzt, wodurch an dieser gegenüber der zweiten Lastschaltkupplung ein erhöhter Verschleiß auftritt.

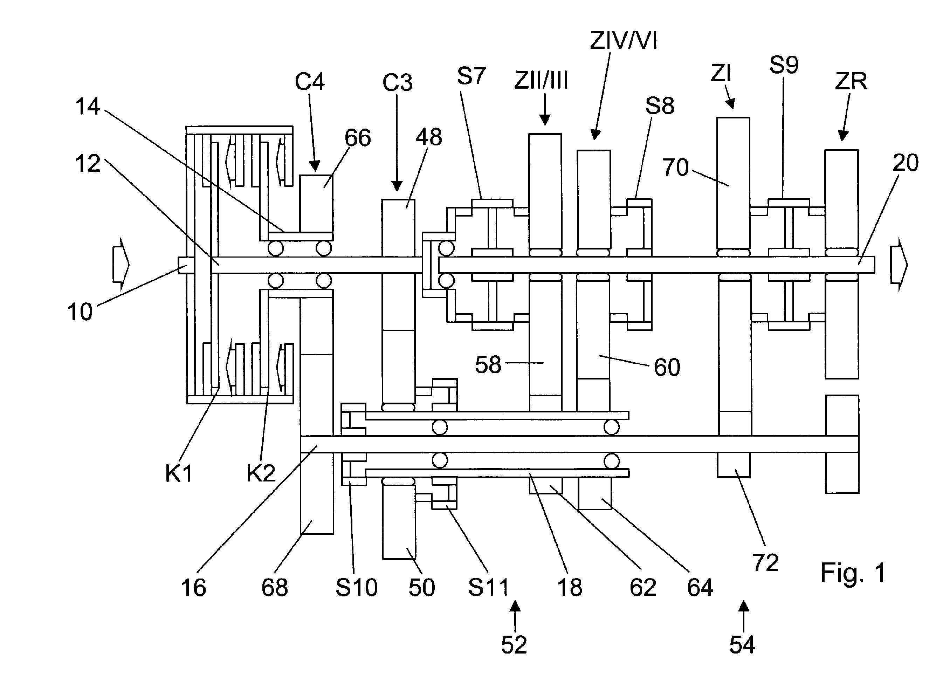

Ferner ist in der DE 31 31 156 A1 in Fig. 1 ein Zahnräderwechselgetriebe gezeigt, welches zwei Lastschaltkupplungen aufweist. Die eine Lastschaltkupplung ist drehfest mit einem Zahnrad einer Konstanten verbunden, welches mit einem zweiten Zahnrad kämmt, das drehfest mit einer parallel angeordneten Vorgelegewelle verbunden ist. Die andere Lastschaltkupplung ist drehfest mit einem Zahnrad verbunden, welches mit einem Losrad kämmt, das drehbar auf der besagten Vorgelegewelle angeordnet ist.

Der Erfindung liegt die Aufgabe zugrunde, ein gattungsgemäßes Zahnräderwechselgetriebe weiterzuentwickeln, insbesondere deren Bauaufwand, Kosten und Gewicht zu reduzieren und den Wirkungsgrad zu erhöhen. Sie wird gemäß der Erfindung durch die Merkmale der unabhängigen Ansprüche gelöst. Weitere Ausgestaltungen ergeben sich aus den Unteransprüchen.

Bei dem erfindungsgemäßen Zahnräderwechselgetriebe ist eine Eingangswelle mit einer Ausgangswelle durch zumindest ein erstes und ein zweites Teilgetriebe verbunden. Die beiden Teilgetriebe sind im Kraftfluß parallel zueinander angeordnet. Jedes Teilgetriebe besitzt eine reibschlüssige Lastschaltkupplung und eine Zwischenwelle, wobei jeweils die Zwischenwelle über die Lastschaltkupplung mit der Eingangswelle wirkungsmäßig verbindbar ist. Ferner besitzt das Zahnräderwechselgetriebe zumindest eine Getriebekonstante je Teilgetriebe, die jeweils ein Zahnrad auf einer der beiden Zwischenwellen aufweisen, von denen zumindest eines mit einer ersten parallel zur Eingangswelle angeordneten Vorgelegewelle wirkungsmäßig verbindbar ist. Die Lastschaltkupplung des ersten Teilgetriebes ist über die erste Getriebekonstante mit einer zur Eingangswelle parallelen zweiten Vorgelegewelle in Wirkverbindung bringbar. Diese zweite Vorgelegewelle ist durch zumindest ein dem ersten Teilgetriebe zugeordnetes Zahnradpaar mit der Ausgangswelle in Wirkverbindung bringbar. Diese Ausgangswelle ist ferner durch zumindest ein ein- und ausrückbares Schaltelement zur Bildung eines direkten Getriebegangs mit wenigstens einer Zwischenwelle eines Teilgetriebes verbindbar. Dieses Schaltelement ist in besonders vorteilhafter Weise beidseitig wirksam, wobei zusätzlich ein Losrad durch dieses Schaltelement mit der Ausgangswelle kuppelbar ist.

Demzufolge wird vorgeschlagen, daß die Lastschaltkupplung des ersten Teilgetriebes über die erste Getriebekonstante mit einer zur Eingangswelle parallelen zweiten Vorgelegewelle in Wirkverbindung bringbar ist, welche durch zumindest ein dem ersten Teilgetriebe zugeordnetes Zahnradpaar mit der Ausgangswelle in Wirkverbindung bringbar ist. Durch die zuschaltbare zweite Vorgelegewelle kann ein zusätzlicher Drehmomentpfad geschaffen werden. Ist insbesondere die Ausgangswelle durch ein ein- und ausrückbares Schaltelement zur Bildung eines direkten Getriebegangs mit der Zwischenwelle des ersten Teilgetriebes verbindbar, können vorteilhaft drei Drehmomentpfade zwischen der Eingangswelle und der Ausgangswelle geschaffen werden. Die Drehmomentpfade können wechselweise genutzt werden und insbesondere kann eine Doppelrückschaltung aus dem direkten Getriebegang und eine Doppelhochschaltung auf den direkten Getriebegang unter Last ohne zusätzliches Zahnradpaar ermöglicht werden.

Vorteilhaft kann von beiden Lastschaltkupplungen über zumindest eine Getriebekonstante auf eine Vorgelegewelle abgetrieben werden. Es können mit einer bestimmten Anzahl von Zahnradpaaren besonders viele Lastschaltmöglichkeiten und insbesondere zumindest die wichtigsten Doppelhoch- und Doppelrückschaltungen unter Last ohne zusätzliche Zahnradpaare erreicht werden.

Die sich aus dem Anfahrvorgang ergebende Belastung kann auf beide Lastschaltkupplungen verteilt werden. Eine überhöhte Temperatur kann trotz kostengünstiger Dimensionierung vermieden, der Verschleiß reduziert und die Wartungsintervalle können verlängert werden. Ferner kann bei Ausfall einer Lastschaltkupplung die zweite Lastschaltkupplung zum Anfahren aus dem ersten Getriebegang genutzt und die Mobilitätssicherheit erhöht werden.

Die Lastschaltkupplungen können auch unterschiedlich für verschiedene Anfahrvorgänge ausgelegt werden und einzeln zum Anfahren aus einem höheren Getriebegang genutzt werden. Die Lastschaltkupplungen werden vorteilhaft abhängig von zumindest einem Betriebsparameter einzeln zum Anfahren genutzt, beispielsweise abhängig von einer an den Lastschaltkupplungen erfaßten Belastung, Reibung, Temperatur und/oder Verschleiß usw.

In einer Ausgestaltung der Erfindung wird vorgeschlagen, daß der direkte Getriebegang der höchste Getriebegang ist. Es kann insbesondere bei Fahrten auf Landstraßen und auf Autobahnen bei hohen Geschwindigkeiten ein guter Wirkungsgrad erreicht werden. Verluste durch Zahneingriffe können vermieden werden.

Ein besonders platzsparendes Zahnräderwechselgetriebe mit wenigen Zahnradpaaren und einer hohen Anzahl an Lastschaltmöglichkeiten, insbesondere mit Doppelhoch- und Doppelrückschaltmöglichkeiten unter Last, kann damit erreicht werden, daß die Getriebekonstanten voneinander verschieden sind und zumindest eine Getriebekonstante über beide Vorgelegewellen mit der Ausgangswelle in Wirkverbindung bringbar ist. Sind zumindest zwei Getriebekonstanten mit jeder Vorgelegewelle wirkungsmäßig verbindbar, kann besonders vorteilhaft jedes Zahnradpaar mit zumindest zwei Getriebekonstanten in Wirkverbindung gebracht werden. Jedem Zahnradpaar können zumindest zwei Getriebegänge oder mit mehr als zwei Getriebekonstanten mehr als zwei Getriebegänge zugeordnet werden.

Die Getriebekonstanten können bei verschiedenen, dem Fachmann als geeignet erscheinenden Ausführungsformen mit beiden Vorgelegewellen verbunden werden. Besonders platzsparend und kostengünstig kann dies jedoch mit zwei zueinander konzentrisch angeordneten Vorgelegewellen erreicht werden, die durch ein Schaltelement miteinander wirkungsmäßig verbindbar sind. Das Schaltelement ist dabei vorteilhaft platzsparend auf der den Lastschaltkupplungen zugewandten Seite der zweiten Vorgelegewelle angeordnet.

Die erfindungsgemäße Lösung, daß zumindest eine Vorgelegewelle mit beiden Getriebekonstanten in Wirkverbindung bringbar ist, trägt dazu bei, die Lastschaltmöglichkeiten und den Wirkungsgrad zu erhöhen, Zahnradpaare einzusparen und insbesondere neben einem sequentiellen Schalten unter Last Doppelhochschaltungen und Doppelrückschaltungen unter Last zu ermöglichen. In einer Ausgestaltung wird vorgeschlagen, daß ein dem ersten Teilgetriebe zugeordnetes Zahnradpaar und ein dem zweiten Teilgetriebe zugeordnetes Zahnradpaar einem dem direkten Getriebegang nächst kleineren Getriebegang zugeordnet ist, wodurch insbesondere Doppelrückschaltungen und Doppelhochschaltungen auf und aus diesem Getriebegang und Last ermöglicht werden können. Eine Doppelrückschaltung aus dem dem direkten Getriebegang nächst kleineren Getriebegang wird häufig für Überholvorgänge benötigt und gilt als wichtiger Schaltvorgang.

Der Gangwechsel vom ersten in den zweiten Getriebegang findet häufig unter hoher Last statt. Um einen besonders komfortablen Gangwechsel zu ermöglichen, ist ein Zahnradpaar vorteilhaft dem niedrigsten und dem zweitniedrigsten Getriebegang zugeordnet. In einer Neutralstellung können die Schaltelemente für den zweiten Getriebegang vorgewählt werden, so daß nach dem Anfahren aus dem ersten Getriebegang allein durch eine Überschneidungssteuerung der Lastschaltkupplungen vom ersten in den zweiten Getriebegang geschaltet werden kann.

In einer weiteren Ausgestaltung wird ferner vorgeschlagen, daß das Zahnradpaar von den den Vorwärtsgetriebegängen zugeordneten Zahnradpaaren am nächsten zu einer Wellenlagerung der Ausgangswelle in einem Getriebegehäuse angeordnet ist. Durchbiegung der Wellen und der Verschleiß können reduziert werden.

Um einen geringen Wellenabstand und damit einen kleinen Bauraum des Getriebes und ein kleines Gewicht zu erreichen, ist vorteilhaft ein Zahnrad für den höchsten Getriebegang auf der Vorgelegewelle angeordnet, die einen größeren Durchmesser aufweist als die andere Vorgelegewelle. Der große Durchmesser kann vorteilhaft zur Übersetzung genutzt werden. Ferner kann ein kleiner Wellenabstand und ein kleines Bauvolumen erreicht werden, indem Schaltelemente der Teilgetriebe axial versetzt angeordnet sind. Ein durch die Schaltelemente bedingter, unnötig großer Wellenabstand kann vermieden werden.

In einer vorteilhaften Ausgestaltung für einen breiten Anwendungsbereich sind neben den zwei Getriebekonstanten drei Zahnradpaare für sechs verschiedene Vorwärtsgetriebegänge und ein Zahnradpaar für zumindest einen Rückwärtsgetriebegang angeordnet. Ein Zahnrad des dem vierten und sechsten Getriebegang zugeordneten Zahnradpaars ist auf der zweiten Vorgelegewelle und ein Zahnrad des dem dritten und vierten Getriebegang zugeordneten Zahnradpaars und ein Zahnrad des dem ersten und zweiten Getriebegang zugeordneten Zahnradpaars ist auf der ersten Vorgelegewelle angeordnet.

Eine vorteilhafte Variante besteht ferner darin, daß ein Zahnrad des dem dritten und sechsten Getriebegang zugeordneten Zahnradpaars auf der zweiten Vorgelegewelle und ein Zahnrad des dem zweiten und vierten Getriebegang zugeordneten Zahnradpaars und ein Zahnrad des dem ersten und zweiten Getriebegang zugeordneten Zahnradpaars auf der ersten Vorgelegewelle angeordnet ist. Es kann vorteilhaft eine progressive Stufung des Zahnräderwechselgetriebes und/oder ein erster Getriebegang mit einer hohen Übersetzung erreicht werden, beispielsweise für den Einsatz bei einer Brennkraftmaschine mit einem Turbolader, bei einer Brennkraftmaschine mit einer geringen Leistung und/oder bei einem Geländekraftfahrzeug usw.

Eine vorteilhafte Stufung der Getriebegänge, insbesondere einen großen Übersetzungsunterschied zwischen dem zweiten und dem vierten Getriebegang und/oder mit einer progressiven Kennlinie kann erreicht werden, indem auf der ersten Vorgelegewelle zumindest ein Zahnrad für einen vierten Getriebegang und ein Zahnrad für einen ersten und einen zweiten Getriebegang und auf einer zweiten Vorgelegewelle zumindest ein Zahnrad für einen sechsten und ein Zahnrad für einen dritten Getriebegang angeordnet ist. Dabei können platzsparend viele Lastschaltmöglichkeiten und Freiheitsgrade für eine bestimmte Stufung der Getriebegänge erreicht werden, indem die Zahnräder auf der zweiten Vorgelegewelle für den dritten und den sechsten Getriebegang jeweils als Losrad ausgeführt sind und über ein gemeinsames Schaltelement mit der zweiten Vorgelegewelle wirkungsmäßig verbindbar sind. Ferner können insbesondere beim II bis VI Getriebegang beide Lastschaltkupplungen geschlossen werden. Verluste, insbesondere infolge von Schleppmomenten, und Verschleiß, insbesondere an einem Axiallager einer Kurbelwelle und an einem Ausrücklager der Lastschaltkupplungen können reduziert und die Lebensdauer kann erhöht werden.

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Fig. 1 zeigt ein erfindungsgemäßes Zahnräderwechselgetriebe, bei dem eine Eingangswelle 10 mit einer Ausgangswelle 20 durch ein erstes Teilgetriebe und ein zweites Teilgetriebe verbunden ist, die im Kraftfluß parallel zueinander angeordnet sind. Die Teilgetriebe besitzen je eine reibschlüssige Lastschaltkupplung K1, K2 und je eine Zwischenwelle 12, 14. Die Zwischenwellen 12, 14 sind zueinander konzentrisch und zur Eingangswelle 10 koaxial angeordnet und können jeweils über die Lastschaltkupplung K1, K2 mit der Eingangswelle 10 wirkungsmäßig verbunden werden.

Die erste Zwischenwelle 12 des ersten Teilgetriebes ist einerseits mit der Ausgangswelle 20 durch eine ein- und ausrückbare Zahnradkupplung zur Bildung eines direkten fünften Getriebegangs V und andererseits durch die Zahnradkupplung über eine erste Getriebekonstante mit einer zur Ausgangswelle 20 parallelen, als Hohlwelle ausgeführten Vorgelegewelle 18 wirkungsmäßig verbindbar.

Die Vorgelegewelle 18 des ersten Teilgetriebes ist durch ein Zahnradpaar ZIV/VI zur Bildung des höchsten und des zweithöchsten Getriebegangs IV, VI mit der Ausgangswelle 20 verbunden. Die zweite Vorgelegewelle 18 besitzt einen größeren Durchmesser als die erste Vorgelegewelle 16. Der große Durchmesser wird vorteilhaft zur Übersetzung genutzt, und zwar insbesondere für den höchsten Getriebegang VI.

Die zweite als Hohlwelle ausgebildete Zwischenwelle 14 des zweiten Teilgetriebes ist über eine zweite Getriebekonstante mit der Vorgelegewelle 16 verbunden, die die Vorgelegewelle 18 des ersten Teilgetriebes mit Spiel durchsetzt. Die zweite Getriebekonstante besitzt ein mit der Vorgelegewelle 16 konzentrisch und drehfest verbundenes Festrad. Die dem zweiten Teilgetriebe angehörige Vorgelegewelle 16 ist über ein Zahnradpaar ZR für zwei Rückwärtsgetriebegänge R mit der Ausgangswelle 20 verbunden. Ein Rückwärtsgetriebegang kann beispielsweise für einen Winterbetrieb und ein Rückwärtsgang kann beispielsweise für einen Sommerbetrieb ausgelegt werden.
Das Zahnradpaar ZR für die Rückwärtsgetriebegänge R besitzt ein auf der Ausgangswelle 20 konzentrisch und drehbar angeordnetes Losrad das durch die ein- und ausrückbare Zahnradkupplung mit der Ausgangswelle 20 kuppelbar ist, und ein Festrad, das konzentrisch und drehfest mit der Vorgelegewelle 16 verbunden ist. Zwischen dem Losrad und dem Festrad des Zahnradpaars ZR ist ein nicht näher dargestelltes Zahnrad zur Drehsinnumkehr angeordnet.

Eine Zahnradkupplung ist auf der den Lastschaltkupplungen K1, K2 zugewandten Seite der zweiten Vorgelegewelle 18 angeordnet. Die Zwischenwelle 12 kann über die erste Getriebekonstante vorteilhaft durch diese ein- und ausrückbare Zahnradkupplung mit der Vorgelegewelle 16 und über die dem zweiten Teilgetriebe zugeordneten Zahnradpaare ZI, ZR mit der Ausgangswelle 20 wirkungsmäßig verbunden werden. Mit jeder Getriebekonstanten kann jeweils über jedes Zahnradpaar auf die Ausgangswelle 20 abgetrieben werden. Die Getriebekonstanten sind verschieden, so daß jedes Zahnradpaar zwei Getriebegängen zugeordnet ist.

Mit den zwei Getriebekonstanten können sechs verschiedene Vorwärtsgetriebegänge I, II, III, IV, V, VI erreicht werden.
**Gangwechsel I-II**
**Gangwechsel II-III**
**Gangwechsel III-IV**
**Gangwechsel IV-V**
**Gangwechsel V-VI**

Entsprechend dem sequentiellen Hochschalten vom ersten bis zum sechsten Getriebegang I-VI kann sequentiell vom sechsten bis zum ersten Getriebegang VI-I unter Last zurückgeschaltet werden.
**Rückwärtsgetriebegang R**
**Gangwechsel I-II**
**Gangwechsel II-IV, IV-II**
**Gangwechsel IV-VI, VI-IV**
**Gangwechsel III-V, V-III**

Neben den beschriebenen Gangwechsel kann von IV nach I, von V nach IV, II und I, von I nach IV und I, von II nach V und von I nach V geschaltet werden.

Die Eingangswelle 10 und die Ausgangswelle 20 sind durch zwei Teilgetriebe 52, 54 verbunden, die im Kraftfluß parallel zueinander angeordnet sind.

Die erste Zwischenwelle 12 des ersten Teilgetriebes 52 ist einerseits mit der Ausgangswelle 20 durch eine ein- und ausrückbare Zahnradkupplung S7 zur Bildung eines direkten fünften Getriebegangs V und andererseits durch eine Zahnradkupplung S11 über eine erste Getriebekonstante C3 mit der zur Ausgangswelle 20 parallelen als Hohlwelle ausgeführten Vorgelegewelle 18 wirkungsmäßig verbindbar. Die erste Getriebekonstante C3 besitzt ein auf der Zwischenwelle 12 konzentrisch und drehfest angeordnetes Festrad 48, das mit einem auf der Vorgelegewelle 18 konzentrisch und drehbar angeordneten Losrad 50 kämmt.

Die Vorgelegewelle 18 des ersten Teilgetriebes 52 ist durch ein Zahnradpaar ZII/III und ein Zahnradpaar ZIV/VI mit der Ausgangswelle 20 verbunden. Die Zahnradpaare ZII/III, ZIV/VI besitzen jeweils ein auf der Ausgangswelle 20 konzentrisch und drehbar gelagertes Losrad 58, 60, die mit auf der Vorgelegewelle 18 angeordneten Festrädern 62, 64 kämmen. Das Losrad 58 ist durch die Zahnradkupplung S7 und das Losrad 60 ist durch eine Zahnradkupplung S8 mit der Ausgangswelle 20 kuppelbar.

Die zweite als Hohlwelle ausgebildete Zwischenwelle 14 des zweiten Teilgetriebes 54 ist über eine zweite Getriebekonstante C4 mit der Vorgelegewelle 16 verbunden, die die Vorgelegewelle 18 des ersten Teilgetriebes 52 mit Spiel durchsetzt. Die zweite Getriebekonstante C4 besitzt ein auf der Zwischenwelle 14 konzentrisch und drehfest angeordnetes Festrad 66 und ein auf der Vorgelegewelle 16 konzentrisch und drehfest angeordnetes Festrad 68.

Die dem zweiten Teilgetriebe 54 angehörige Vorgelegewelle 16 ist über das Zahnradpaar ZI und über ein Zahnradpaar ZR mit der Ausgangswelle 20 verbunden.

Das Zahnradpaar ZI für den ersten Getriebegang I besitzt ein auf der Ausgangswelle 20 konzentrisch und drehbar angeordnetes Losrad 70, das mit einer Zahnradkupplung S9 mit der Ausgangswelle 20 kuppelbar ist, und ein auf der Vorgelegewelle 16 konzentrisch und drehfest angeordnetes Festrad 72.

Die Zwischenwelle 14 des zweiten Teilgetriebes 54 kann über die zweite Getriebekonstante C4 durch eine ein- und ausrückbare Zahnradkupplung S10 mit der Vorgelegewelle 18 des ersten Teilgetriebes 52 und über die dem ersten Teilgetriebe 52 zugeordneten Zahnradpaare ZII/III, ZIV/VI mit der Ausgangswelle 20 wirkungsmäßig verbunden werden. Die Zwischenwelle 12 kann über die erste Getriebekonstante C3 vorteilhaft durch die ein- und ausrückbare Zahnradkupplung S10 mit der Vorgelegewelle 16 und über die dem zweiten Teilgetriebe 54 zugeordneten Zahnradpaare ZI, ZR mit der Ausgangswelle 20 wirkungsmäßig verbunden werden. Mit jeder Getriebekonstanten C3 und C4 kann jeweils über jedes Zahnradpaar ZI, ZIV/VI, ZII/III und ZR auf die Ausgangswelle 20 abgetrieben werden. Die Getriebekonstanten C3 und C4 sind verschieden, so daß die Zahnradpaare ZII/III, ZIV/VI jeweils zwei Getriebegängen II, III und IV, VI zugeordnet sind. Dem Zahnradpaar ZI ist nur der erste Getriebegang I zugeordnet, wodurch dieser vorteilhaft unabhängig von einem anderen Getriebegang gewählt und gezielt auf einen bestimmten Anwendungsbereich des Zahnräderwechselgetriebes abgestimmt werden kann.

### Bezugszeichen

- K1: Lastschaltkupplung
- K2: Lastschaltkupplung
- C1: Getriebekonstante
- C2: Getriebekonstante
- C3: Getriebekonstante
- C4: Getriebekonstante
- ZI: Zahnradpaar
- ZII/III: Zahnradpaar
- ZI/II: Zahnradpaar
- ZIII/IV: Zahnradpaar
- ZIV/VI: Zahnradpaar
- ZR: Zahnradpaar
- S1: Schaltelement
- S2: Schaltelement
- S3: Schaltelement
- S4: Schaltelement
- S5: Schaltelement
- S6: Schaltelement
- S7: Schaltelement
- S8: Schaltelement
- S9: Schaltelement
- S10: Schaltelement
- S11: Schaltelement
- S12: Schaltelement
- S13: Schaltelement
- GS: Geschaltete Schaltelemente
- I: Getriebegang
- II: Getriebegang
- III: Getriebegang
- IV: Getriebegang
- V: Getriebegang
- VI: Getriebegang
- R: Rückwärtsgetriebegang
- Q: Quellgang
- Z: Zielgang
- 10: Eingangswelle
- 12: Zwischenwelle
- 14: Zwischenwelle
- 16: Vorgelegewelle
- 18: Vorgelegewelle
- 20: Ausgangswelle
- 22: Teilgetriebe
- 24: Teilgetriebe
- 26: Zahnrad
- 28: Zahnrad
- 30: Zahnrad
- 32: Zahnrad
- 34: Zahnrad
- 36: Zahnrad
- 38: Zahnrad
- 40: Zahnrad
- 42: Zahnrad
- 44: Zahnrad
- 46: Zahnrad
- 48: Zahnrad
- 50: Zahnrad
- 52: Teilgetriebe
- 54: Teilgetriebe
- 56: Zahnrad
- 58: Zahnrad
- 60: Zahnrad
- 62: Zahnrad
- 64: Zahnrad
- 66: Zahnrad
- 68: Zahnrad
- 70: Zahnrad
- 72: Zahnrad
- 74: Zahnrad
- 76: Zahnrad
- 78: Teilgetriebe
- 80: Teilgetriebe
- 82: Teilgetriebe
- 84: Teilgetriebe
- 86: Teilgetriebe
- 88: Teilgetriebe
- 90: Teilgetriebe
- 92: Teilgetriebe
- 94: Zahnrad
- 96: Zahnrad
- 98: Zahnrad
- 100: Zahnrad
- 102: Zahnrad
- 104: Teilgetriebe
- 106: Teilgetriebe
- 108: Teilgetriebe
- 110: Zahnrad
- 112: Zahnrad
- 114: Zahnrad
- 116: Zahnrad
- 118: Zahnrad

## Patentansprüche

1. Zahnräderwechselgetriebe, bei dem eine Eingangswelle (10 bzw. 12) mit einer Ausgangswelle (20) durch zumindest ein erstes und ein zweites Teilgetriebe (52 u. 54) verbunden ist, die im Kraftfluß parallel zueinander angeordnet sind und je eine reibschlüssige Lastschaltkupplung (K1 bzw. K2) und je eine Zwischenwelle (12 bzw. 14) aufweisen, wobei jeweils die Zwischenwelle (12 bzw. 14) über die Lastschaltkupplung (K1 bzw. K2) mit der Eingangswelle (10) wirkungsmäßig verbindbar ist, und mit je Teilgetriebe (52 bzw. 54) zumindest einer Getriebekonstanten (C3 bzw. C4), die jeweils ein Zahnrad auf einer der beiden Zwischenwellen (12 bzw. 14) aufweisen, von denen zumindest eines mit einer ersten parallel zur Eingangswelle (10) angeordneten Vorgelegewelle (18 bzw. 16) wirkungsmäßig verbindbar ist, **wobei** die Lastschaltkupplung (K1) des ersten Teilgetriebes (52) über die erste Getriebekonstante (C3) mit einer zur Eingangswelle (10) parallelen zweiten Vorgelegewelle (18) in Wirkverbindung bringbar ist, welche durch zumindest ein dem ersten Teilgetriebe (52) zugeordnetes Zahnradpaar (ZIV/VI, ZII/III) mit der Ausgangswelle (20) in Wirkverbindung bringbar ist, **wobei** die Ausgangswelle (20) durch zumindest ein ein- und ausrückbares Schaltelement (S7) zur Bildung eines direkten Getriebegangs (V) mit wenigstens einer Zwischenwelle (12) eines Teilgetriebes (52) verbindbar ist, **wobei** dieses Schaltelement (S7) beidseitig wirksam ist wobei zusätzlich ein Losrad (58) durch dieses Schaltelement (S7) mit der Ausgangswelle (20) kuppelbar ist.

2. Zahnräderwechselgetriebe nach Anspruch 1,
**dadurch gekennzeichnet,**
**daß** der direkte Getriebegang (VI) der höchste Getriebegang (VI) ist.

3. Zahnräderwechselgetriebe nach Anspruch 1 oder 2,
**dadurch gekennzeichnet,**
**daß** die Getriebekonstanten (C3, C4) voneinander verschieden sind und zumindest eine Getriebekonstante (C3, C4) über beide Vorgelegewellen (16, 18) mit der Ausgangswelle (20) in Wirkverbindung bringbar ist.

4. Zahnräderwechselgetriebe nach einem der Ansprüche 1 bis 3,
**dadurch gekennzeichnet,**
**daß** ein Zahnradpaar (ZR) für einen Rückwärtsgetriebegang (R) mit zumindest zwei Getriebekonstanten (C1, C2) in Wirkverbindung bringbar ist.

5. Zahnräderwechselgetriebe nach Anspruch 4,
**dadurch gekennzeichnet,**
**daß** jedes Zahnradpaar mit zumindest zwei Getriebekonstanten in Wirkverbindung bringbar ist.

6. Zahnräderwechselgetriebe nach einem der Ansprüche 1 bis 5,
**dadurch gekennzeichnet,**
**daß** die Vorgelegewellen (16, 18) konzentrisch angeordnet und durch zumindest ein Schaltelement (S10) miteinander wirkungsmäßig verbindbar sind.

7. Zahnräderwechselgetriebe nach Anspruch 6,
**dadurch gekennzeichnet,**
**daß** das Schaltelement (S10) auf der den Lastschaltkupplungen (K1, K2) zugewandten Seite der zweiten Vorgelegewelle (18) angeordnet ist.

8. Zahnräderwechselgetriebe nach einem der vorhergehenden Ansprüche,
**dadurch gekennzeichnet,**
**daß** ein Zahnrad (64) für den höchsten Getriebegang (VI) auf einer zweiten Vorgelegewelle (18) angeordnet ist, die einen größeren Durchmesser aufweist als die erste Vorgelegewelle (16).

9. Zahnräderwechselgetriebe nach einem der vorhergehenden Ansprüche,
**dadurch gekennzeichnet,**
**daß** Schaltelemente der Teilgetriebe axial versetzt angeordnet sind.
